Europäisches Patentamt

(19) European Patent Office

Office européen des brevets

(11) Numéro de publication : **0 019 501**
**B1**

(12) **FASCICULE DE BREVET EUROPÉEN**

(45) Date de publication du fascicule du brevet :
26.01.83

(21) Numéro de dépôt : **80400505.6**

(22) Date de dépôt : **16.04.80**

(51) Int. Cl.³ : **B 60 R   1/06**

(54) **Dispositif de commande d'un rétroviseur extérieur de l'intérieur d'un véhicule.**

(30) Priorité : **16.05.79 FR 7912494**

(43) Date de publication de la demande :
**26.11.80 Bulletin 80/24**

(45) Mention de la délivrance du brevet :
**26.01.83 Bulletin 83/04**

(84) Etats contractants désignés :
**DE GB IT SE**

(56) Documents cités :
**FR A 2 333 670**
**GB A 1 008 228**
**US A 3 390 588**
**US A 3 459 470**

(73) Titulaire : **Manzoni, Stéphane**
**1, rue Pasteur**
**F-39200 Saint-Claude (FR)**

(72) Inventeur : **Manzoni, Stéphane**
**1, rue Pasteur**
**F-39200 Saint-Claude (FR)**

(74) Mandataire : **Moulines, Pierre et al**
**Cabinet BEAU de LOMENIE 55, rue d'Amsterdam**
**F-75008 Paris (FR)**

Dispositif de commande d'un rétroviseur extérieur de l'intérieur d'un véhicule

La présente invention a pour objet un dispositif de commande d'un rétroviseur extérieur de l'intérieur d'un véhicule, notamment pour les rétroviseurs à montage dit « sur gousset ou sur triangle ».

On connaît des rétroviseurs à commande à distance dans lesquels le miroir est monté de façon articulée, au moyen d'une rotule ou de deux axes perpendiculaires sur un boîtier solidaire du véhicule.

Pour la commande, il est également connu d'utiliser un câble de manœuvre à action directe pour la commande des mouvements gauche-droite et ciel-terre, susceptible d'être déplacé par coulissement axial ou par rotation afin d'obtenir, soit un mouvement ciel-terre ou gauche-droite du miroir.

On trouve une telle disposition dans le brevet GB-A-1 008 228 qui concerne un moyen de commande constitué d'un pignon agissant sur une crémaillère solidaire du miroir pour l'un des mouvements et l'autre mouvement étant obtenu par une traction ou une poussée sur le câble qui est solidaire du pignon qui présente des faces susceptibles d'entraîner la crémaillère suivant l'axe longitudinal du pignon.

Or, une telle disposition présente certains inconvénients en ce qui concerne l'entraînement de la crémaillère par le pignon suivant des plans inclinés et le guidage en translation du support de miroir.

La présente invention a pour objet un dispositif de commande de ce type perfectionné.

Conformément à la présente invention, l'entretoise présente un alésage dans lequel est monté coulissant axialement et rotatif, un arbre dont l'une des extrémités est solidaire d'un organe de manœuvre, et dont l'autre extrémité est munie d'un coulisseau monté pivotant et comportant deux tétons se déplaçant dans deux rainures inclinées, ménagées dans des faces parallèles de l'embase, perpendiculaires au second axe, ledit arbre comportant un moyen d'entraînement en rotation autour du premier axe coopérant avec l'organe de support du miroir.

Le dispositif suivant l'invention permet d'obtenir un mouvement régulier du miroir et il peut être actionné de façon aisée. Par ailleurs, il est très simple et peu onéreux.

D'autres caractéristiques et avantages de l'invention, seront mieux compris à la lecture de la description qui va suivre de plusieurs exemples de réalisation, et en se référant aux dessins annexés dans lesquels :

les figures 1 à 3, sont des vues en élévation et en coupe longitudinale d'un mode de réalisation du dispositif de commande d'un rétroviseur suivant l'invention dans différentes positions ;

la figure 4, est une vue en coupe suivant la ligne IV-IV de la figure 1 ;

la figure 5, est une vue latérale du dispositif suivant la flèche V de la figure 1 ;

la figure 6, est une vue en coupe suivant la ligne VI-VI de la figure 1 ;

la figure 7, est une vue décalée de 90° par rapport à la figure 1, de l'embase, le porte-miroir n'étant pas figuré ;

la figure 8, est une vue d'un mode de montage du bouton de manœuvre ;

la figure 9, est une vue en élévation d'un autre mode de réalisation de l'organe de commande ;

la figure 10, est une vue en élévation et en coupe longitudinale d'un autre mode de réalisation du dispositif de commande d'un rétroviseur ;

la figure 11, est une vue latérale du dispositif suivant la flèche XI de la figure X.

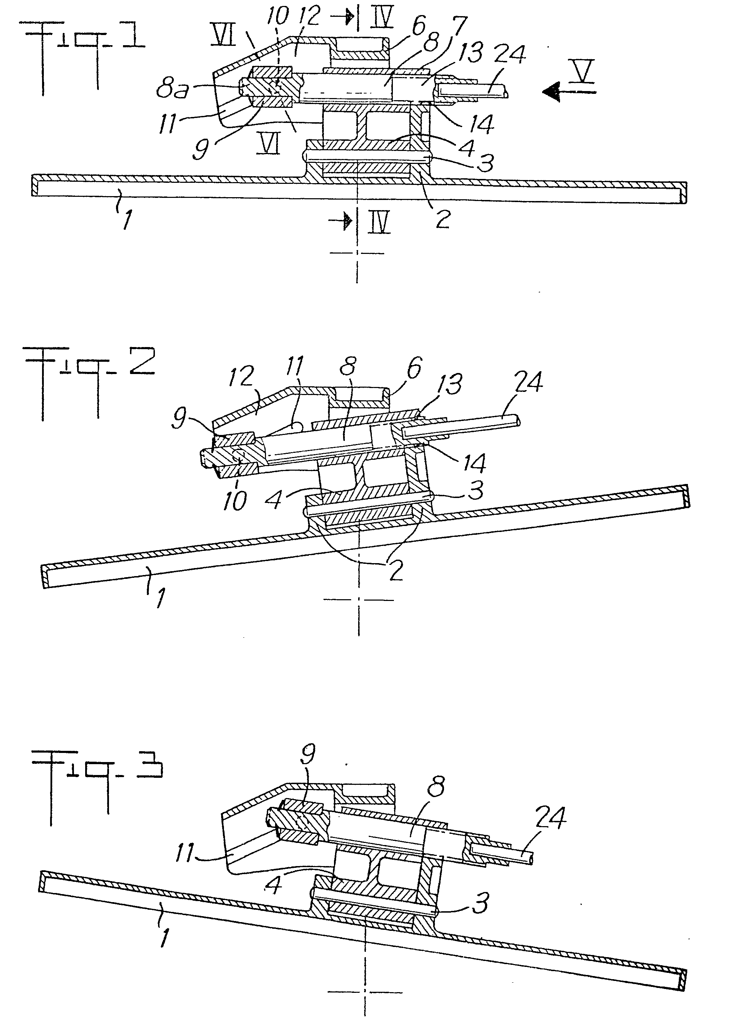

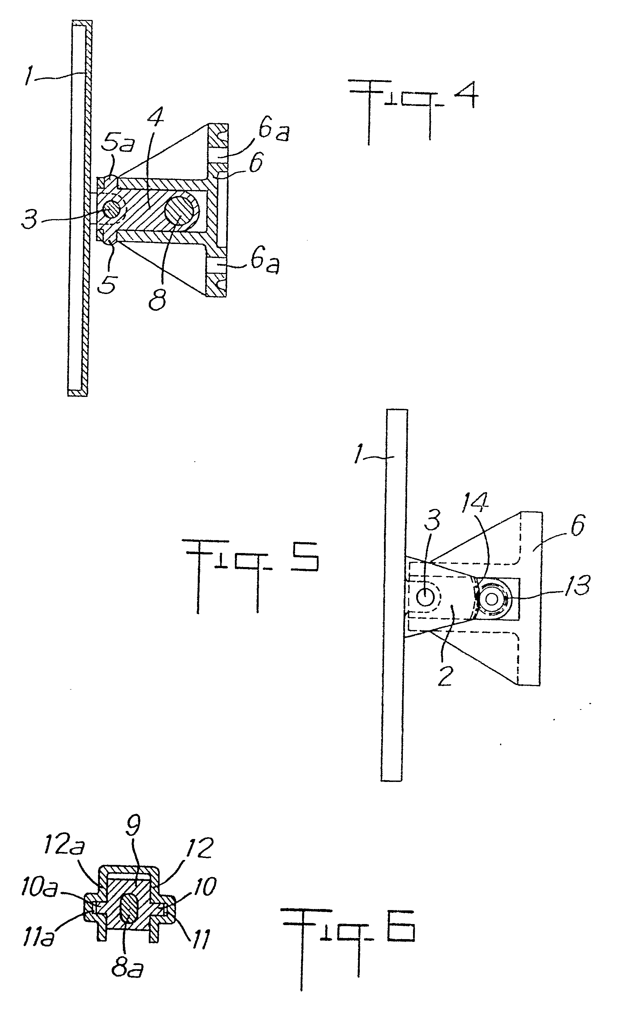

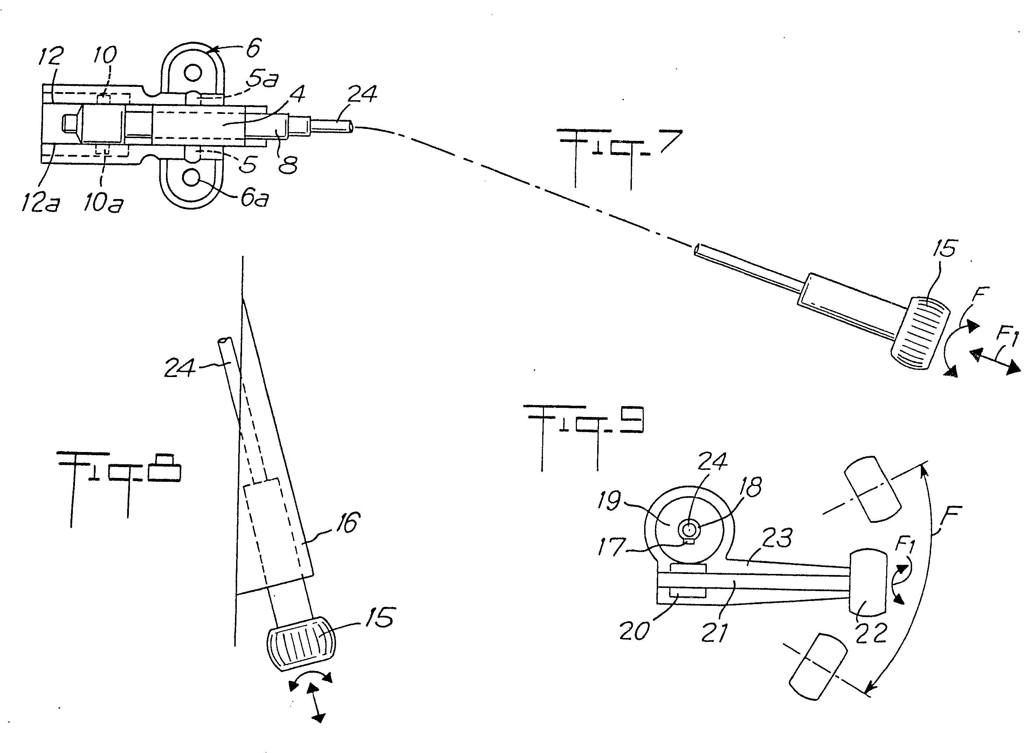

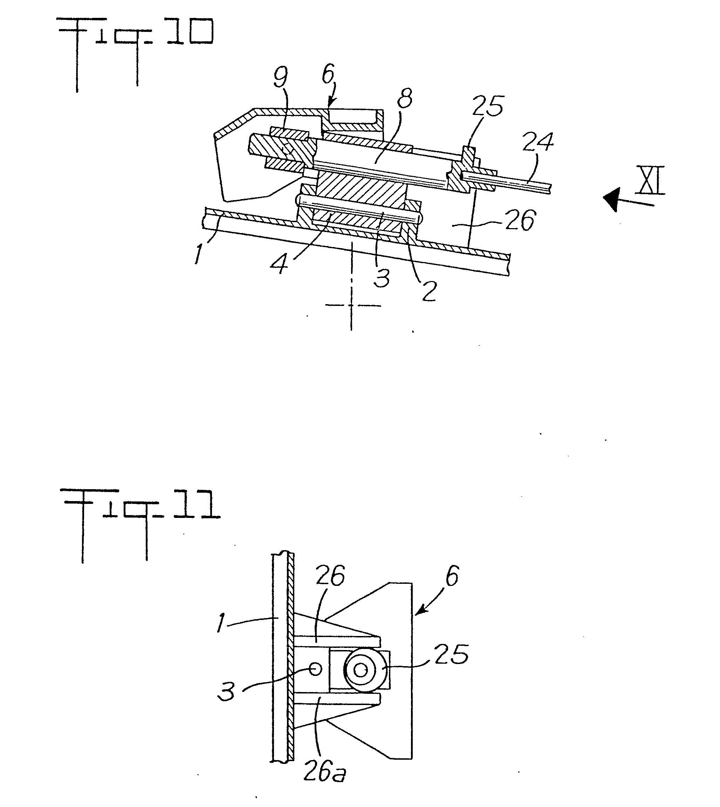

Aux figures 1 à 7, on a représenté un mode de réalisation d'un dispositif de commande d'un rétroviseur qui comprend un organe de support d'un miroir 1 qui présente sur sa face arrière une chape 2 dans laquelle est monté un premier axe horizontal 3 sur lequel est articulée une entretoise 4 présentant deux tétons 5, 5a engagés dans des trous correspondants d'une embase 6, présentant des trous 6a pour son montage au moyen d'organes de fixation sur le fond d'un boîtier de rétroviseur, non représenté au dessin. Les tétons 5, 5a sont disposés suivant un deuxième axe permettant le pivotement vertical de l'entretoise et du support de miroir.

L'entretoise 4 présente un alésage 7 dans lequel est monté coulissant axiaiement et rotatif, un arbre 8 dont l'une des extrémités est solidaire d'un organe de manœuvre 24 constitué d'un câble flexible.

A son autre extrémité, l'arbre 8 présente une partie décollée 8a sur laquelle est monté pivotant, un coulisseau 9 comportant deux tétons 10, 10a qui sont montés coulissants dans deux rainures inclinées 11, 11a d'un prolongement de l'embase 6 présentant deux faces parallèles 12, 12a contre lesquelles se déplace le coulisseau 9.

Les faces parallèles 12, 12a de l'embase 6 sont perpendiculaires au second axe matérialisé par les tétons 5, 5a.

A son extrémité située du côté de l'organe de manœuvre, l'arbre 8 présente un pignon 13, conformé sur l'arbre 8 ou rapporté sur ledit arbre, ledit pignon 13 engrenant avec un secteur denté 14 (figure 5), conformé à l'extrémité du prolongement de l'une des pattes de la chape 2 qui est perpendiculaire à l'organe de support 1.

Comme représenté à la figure 7, le câble de manœuvre 24 prolongé à l'intérieur du véhicule où il est monté sur gousset, comporte à son extrémité un bouton de manœuvre 15 qui permet d'imprimer une rotation au câble 24 suivant la flèche F ou un coulissement axial suivant la flèche F1.

Suivant un autre mode de réalisation représenté à la figure 8, l'extrémité du câble 24 muni de son bouton de manœuvre 15 est montée dans un carter de support et de guidage fixé sur la porte du véhicule.

A la figure 9 on a représenté un autre mode de réalisation dans lequel l'extrémité du câble 24 est montée au moyen d'un organe de clavetage 17 et d'une rampe hélicoïdale 18, sur un pignon 19 qui engrène avec un pignon 20 claveté à l'extrémité d'un axe 21 muni à son autre extrémité, d'un bouton de manœuvre 22 disposé dans un levier 23 susceptible de pivoter autour de l'axe du pignon 19.

Les pignons 19, 20 présentent une denture à inclinaisons identiques suivant un angle de 90°.

Le dispositif de commande d'un rétroviseur fonctionne de la manière suivante en se reportant aux figures 1 à 7.

Lorsqu'on exerce sur le bouton 15, un mouvement de rotation suivant la flèche F, on entraîne en rotation le câble 24, l'arbre 8 et le pignon 13 qui coopère avec le secteur denté 14 solidaire de l'organe de support de miroir 1, de telle sorte que ce dernier pivote autour de l'axe 3 suivant un mouvement « ciel-terre ».

Lorsqu'on exerce sur le bouton 15, une traction ou une poussée suivant un déplacement axial correspondant à la flèche F1, on provoque un déplacement axial du câble 24, de l'arbre 8 et du coulisseau 9 qui par l'intermédiaire des tétons 10, 10a engagés dans les rainures inclinées 11, 11a de l'embase 6, assure le pivotement de l'entretoise 4 et du support de miroir 1 autour de l'axe vertical matérialisé par les tétons 5, 5a, suivant un mouvement « gauche-droite », ainsi qu'il est représenté aux figures 1 à 3.

Dans le cas du dispositif de manœuvre représenté à la figure 9, le mouvement « ciel-terre » est obtenu par le déplacement du bouton 22 suivant la flèche F, ce qui entraîne une rotation du câble 24.

Par contre, une rotation du bouton 22 suivant la flèche F1 commande un déplacement axial du câble et un mouvement « gauche-droite » du porte-miroir.

Aux figures 10 et 11, on a représenté une variante de réalisation dans laquelle le pignon 13 et le secteur denté 14 sont supprimés et sont remplacés par un disque excentré 25 solidaire en rotation de l'arbre 8 et qui est disposé entre deux parois 26, 26a parallèles entre elles et perpendiculaires à l'organe de support du miroir 1 dont elles sont solidaires.

Lorsqu'une rotation imprimée au câble 24 est transmise à l'arbre 8, il se produit également une rotation du disque excentré 25 qui provoque par l'intermédiaire des parois 26, 26a, un déplacement du support de miroir autour de l'axe 3 et un mouvement « ciel-terre » du miroir.

**Revendications**

1. Dispositif de commande d'un rétroviseur extérieur de l'intérieur d'un véhicule, ledit rétroviseur comportant un organe de support du miroir (1) monté pivotant suivant un premier axe (3) sur une entretoise (4) montée pivotante suivant un second axe perpendiculaire audit premier axe, sur une embase (6) solidaire du fond du boîtier, et ledit dispositif de commande comportant un organe de manœuvre (15, 24) agissant par rotation et par déplacement axial pour faire pivoter le miroir autour des deux axes précités, caractérisé en ce que l'entretoise (4) présente un alésage (7) dans lequel est monté coulissant axialement et rotatif, un arbre (8) dont l'une des extrémités est solidaire de l'organe de manœuvre (15, 24), et dont l'autre extrémité est munie d'un coulisseau (9) monté pivotant et comportant deux tétons (10, 10a) se déplaçant dans deux rainures inclinées (11, 11a) ménagées dans des faces parallèles (12, 12a) de l'embase (6) perpendiculaires au second axe, ledit arbre (8) comportant un moyen d'entraînement en rotation (13, 14, 25, 26) autour du premier axe (3) coopérant avec l'organe de support du miroir (1).

2. Dispositif suivant la revendication 1, caractérisé en ce que le moyen d'entraînement en rotation autour du premier axe (3) coopérant avec l'organe de support du miroir (1) est constitué d'un pignon (13) solidaire en rotation de l'arbre (8) et engrenant avec un secteur denté (14) ménagé sur la face arrière du support de miroir (1).

3. Dispositif suivant la revendication 1, caractérisé en ce que le moyen d'entraînement en rotation autour du premier axe (3) est constitué d'un organe excentré (25) solidaire en rotation de l'arbre (8), et disposé entre deux parois parallèles (26, 26a) entre elles et perpendiculaires à l'organe de support du miroir (1) dont elles sont solidaires.

4. Dispositif suivant l'une quelconque des revendications 1 à 3, caractérisé en ce que l'organe de manœuvre est constitué d'un câble flexible (24) monté du côté opposé à l'arbre (8) sur un gousset et présentant à son extrémité, un bouton de manœuvre (15).

5. Dispositif suivant l'une quelconque des revendications 1 à 3, caractérisé en ce que l'organe de manœuvre est constitué d'un câble flexible (24) monté du côté opposé à l'arbre (8) dans un carter solidaire d'une portière de véhicule et présentant à son extrémité, un bouton de manœuvre (15).

6. Dispositif suivant l'une quelconque des revendications 1 à 5, caractérisé en ce que l'une des extrémités du câble (24) est montée au moyen d'un organe de clavetage (17) et d'une rampe hélicoïdale (18) sur un pignon (19) à denture inclinée qui engrène avec un autre pignon (20) présentant une même denture inclinée, ce dernier pignon étant monté à l'extrémité d'un axe (21), dont l'autre extrémité est munie d'un bouton de manœuvre (22) et qui est monté rotatif dans un levier (23) susceptible de pivoter autour de l'axe du premier pignon (19).

**Claims**

1. A control device for controlling an outside rearview mirror from inside a vehicle, the said rearview mirror comprising a mirror supporting member (1) mounted for pivoting about a first axis (3) on a cross-piece (4) which is mounted for pivoting about a second axis perpendicular to the said first axis, on a collar (6) integral with the base of the casing, the said control device comprising an operating member (15, 24) acting by rotation and by axial movement for pivoting the mirror about the aforesaid two axes, characterized in that the cross-piece (4) is provided with a bore (7) in which a shaft (8) is mounted for axial sliding and rotation, one end of which shaft is integral with the operating member (15, 24), and the other end of which is provided with a pivotally mounted slide (9) comprising two lugs (10, 10a) moving in two inclined grooves (11, 11a) provided in parallel faces (12, 12a) of the collar (6), which faces are perpendicular to the second axis, the said shaft (8) comprising a means (13, 14, 25, 26) for being driven in rotation about the first axis (3), which means cooperates with the mirror supporting member (1).

2. A device according to claim 1, characterized in that the means provided for driving the shaft in rotation about the first axis (3), and which cooperates with the mirror supporting member (1), consists in a pinion (13), fast in rotation with the shaft (8) and meshing with a toothed segment (14) provided in the rear face of the mirror support (1).

3. A device according to claim 1, characterized in that the means provided for driving the shaft in rotation about the first axis (3) consists in an eccentric member (25) fast in rotation with the shaft (8), and situated between two walls (26, 26a), parallel together and perpendicular to the mirror supporting member (1) with which they are integral.

4. A device according to any one to claims 1 to 3, characterized in that the operating member is constituted by a flexible cable (24), mounted on a bracket on the side opposite the shaft (8), and provided at its end with a control knob (15).

5. A device according to any one of claims 1 to 3, characterized in that the operating member is constituted by a flexible cable (24), mounted on the side opposite the shaft in a casing integral with a vehicle door and provided at its end with a control knob (15).

6. A device according to any one of claims 1 to 3, characterized in that one of the ends of the cable (24) is mounted by way of a keying member (17) and of a helical ramp (18) on a pinion (19) with inclined teeth, said second pinion being mounted at the end of an axis (21), the other end of which is provided with a control knob (22) mounted for rotation in a lever (23) adapted to pivot about the axis of the first pinion (19).

**Ansprüche**

1. Vorrichtung zum Steuern eines Außenrückspiegels eines Fahrzeugs, wobei der Rückspiegel einen Spiegelhalter (1) aufweist, der über eine erste Achse (3) an einem Zwischenstück (4) angelenkt ist, das über eine zur ersten Achse senkrechte zweite Achse an einem mit dem Boden des Gehäuses fest verbundenen Sockel (6) angelenkt ist, und wobei die Steuervorrichtung ein Betätigungsorgan (15, 24) aufweist, das durch Drehung und axiale Verschiebung wirkt zum Schwenken des Spiegels um die beiden angegebenen Achsen, dadurch gekennzeichnet, daß das Zwischenstück (4) eine Bohrung (7) aufweist, in der axial verschieblich und drehbar eine Welle (8) gelagert ist, deren eines Ende mit dem Betätigungsorgan (15, 24) fest verbunden ist und deren anderes Ende mit einer schwenkbar gelagerten Gleitführung (9) mit zwei Ansätzen (10, 10a) versehen ist, die in zwei geneigten Nuten (11, 11a) verschiebbar sind, die in parallelen Seiten (12, 12a) des Sockels (6) senkrecht zur zweiten Achse ausgebildet sind, wobei die Welle (8) eine mit dem Spiegelhalter (1) zusammenarbeitende Einrichtung (13, 14, 25, 26) für den Drehantrieb um die erste Achse (3) aufweist.

2. Vorrichtung nach Anspruch 1, dadurch gekennzeichnet, daß die mit dem Spiegelhalter (1) zusammenarbeitende Einrichtung für den Drehantrieb um die erste Achse (3) aus einem Zahnrad (13) besteht, das drehfest mit der Welle (8) verbunden ist und mit einem Zahnsektor (14) kämmt, der an der Rückseite des Spiegelhalters (1) ausgebildet ist.

3. Vorrichtung nach Anspruch 1, dadurch gekennzeichnet, daß die Einrichtung für den Drehantrieb um die erste Achse (3) aus einem exzentrischen Organ (25) besteht, das drehfest mit der Welle (8) verbunden und zwischen zwei Wänden (26, 26a) angeordnet ist, die zueinander parallel und zum Spiegelhalter (1) senkrecht sind, mit dem sie fest verbunden sind.

4. Vorrichtung nach einem der Ansprüche 1 bis 3, dadurch gekennzeichnet, daß das Betätigungsorgan aus einem biegsamen Kabel (24) besteht, das auf der gegenüberliegenden Seite der Welle (8) an einem Ansatz befestigt ist und an seinem Ende einem Betätigungsknopf (15) aufweist.

5. Vorrichtung nach einem der Ansprüche 1 bis 3, dadurch gekennzeichnet, daß das Betätigungsorgan aus einem biegsamen Kabel (24) besteht, das auf der gegenüberliegenden Seite der Welle (8) in einem Gehäuse befestigt ist, das mit einer Fahrzeugtür befestigt ist und an seinem Ende einen Betätigungsknopf (15) aufweist.

6. Vorrichtung nach einem der Ansprüche 1 bis 5, dadurch gekennzeichnet, daß eines der Enden des Kabels (24) mittels eines Keilverbindungsorgans (17) und einer schraubenförmigen Rampe (18) an einem Zahnrad (19) mit Schrägverzahnung befestigt ist, das mit einem weiteren Zahnrad (20) mit derselben Schrägverzahnung kämmt, wobei das letztere am Ende einer Achse (21) befestigt ist, deren anderes Ende mit dem Betätigungsknopf (22) versehen und die in einem Hebel (23) drehbar gelagert ist, der um die Achse des ersten Zahnrads (19) schwenkbar ist.

Fig.1

Fig.2

Fig.3

Fig. 4

Fig. 5

Fig. 6

Fig. 7

Fig. 8

Fig. 9

0 019 501

Fig. 10

Fig. 11

4